(19) Europäisches Patentamt
European Patent Office
Office européen des brevets

(11) **EP 1 950 111 B1**

(12) **EUROPEAN PATENT SPECIFICATION**

(45) Date of publication and mention
of the grant of the patent:
**06.11.2013 Bulletin 2013/45**

(51) Int Cl.:
**B60T 5/00** *(2006.01)* **B60T 17/22** *(2006.01)*

(21) Application number: **08150519.0**

(22) Date of filing: **22.01.2008**

(54) **Process for assessing the temperature of the braking elements of a vehicle, in particular a railway vehicle**

Verfahren zur Bewertung der Temperatur der Bremselemente eines Fahrzeugs, insbesondere eines Schienenfahrzeugs

Procédé pour l'évaluation de la température des éléments de freinage d'un véhicule, en particulier un véhicule de voie ferrée

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **23.01.2007 IT TO20070040**

(43) Date of publication of application:
**30.07.2008 Bulletin 2008/31**

(73) Proprietor: **Faiveley Transport Italia S.r.l.**
**10045 Piossasco (TO) (IT)**

(72) Inventor: **Tione, Roberto**
**I-10020 Lauriano (Torino) (IT)**

(74) Representative: **Quinterno, Giuseppe et al**
**Jacobacci & Partners S.p.A.**
**Corso Emilia 8**
**10152 Torino (IT)**

(56) References cited:
| | |
|---|---|
| **EP-A1- 0 594 113** | **WO-A1-92/00212** |
| **WO-A1-99/08018** | **WO-A1-03/043864** |
| **DE-A1- 4 316 993** | **DE-A1- 10 025 127** |
| **DE-A1- 10 029 238** | **DE-A1- 10 157 449** |
| **DE-A1- 19 943 352** | **DE-A1-102005 019 276** |
| **FR-A1- 2 794 825** | **GB-A- 2 289 765** |
| **GB-A- 2 363 436** | **US-A- 5 685 619** |

**Description**

The present invention relates to a process for assessing the temperature of the braking elements of a vehicle, in particular a railway vehicle, of the kind according to the preamble of claim 1.

DE 10 2005 019 276 A1 discloses a method of that kind for use in a road vehicle having an internal combustion engine. The net thermal energy applied to the brake disks arranged close to the engine is calculated taking into account also the temperature in the engine compartment.

EP 1 083 360 A provides a system implementing an algorithm to estimate the temperature of a first braking element (brake disk) and a second braking element (pad) in a vehicle belonging to a railway conveyance or train. This algorithm evaluates the heat developed in the brake disk / pad system having regard to the overall change in the kinetic and potential energy of the vehicle, the contribution of the resistances to motion and any involvement of additional braking devices other than the conventional pneumatic brake.

DE 43 16 993 A1 discloses methods for determining the remaining thickness of brake pads and the temperature of brake disks.

Further methods for determining the temperature of brake disks are disclosed in DE 101 57 449 A1, WO 92/00212 A1 and GB 2 289 765.

One object of this invention is to provide an innovative and more direct process for assessing the temperature of brake disks, which does not among other things require calculation of either the kinetic energy of the vehicle or the changes in its potential energy, nor recognition of the contribution of other types of brake.

This and other objects will be accomplished according to the invention through a process whose main characteristics are as defined in appended claim 1.

Other advantages and characteristics of the present invention will become clear from the following detailed description which is given with reference to the appended drawings which are provided purely by way of non-limiting example and in which:

Figure 1 is a partial plan view of a bogie of a railway vehicle, and shows in particular one axle with which two brake disk devices are associated,
Figure 2 is a partial perspective view of two different brake disks,
Figure 3 is an illustrative diagrammatical representation of a model of a one-dimensional simulation of a brake disk used in the process according to the invention,
Figure 4 is a block diagram illustrating the algorithm used in the process according to the invention,
Figure 5 is a block diagram of the processing system and the associated devices used to implement the process according to the invention,
Figure 6 shows example temperature changes in a brake disk assessed using the process according to the invention,
Figure 7 is a set of two diagrams showing simulated changes in the forward speed of the vehicle and the braking force applied in a direction normal to the brake disk as a function of time shown as the abcissa, and
Figure 8 shows the corresponding temperatures calculated using the process according to the invention in relation to the simulated changes in forward speed and braking force shown in the graphs in Figure 7.

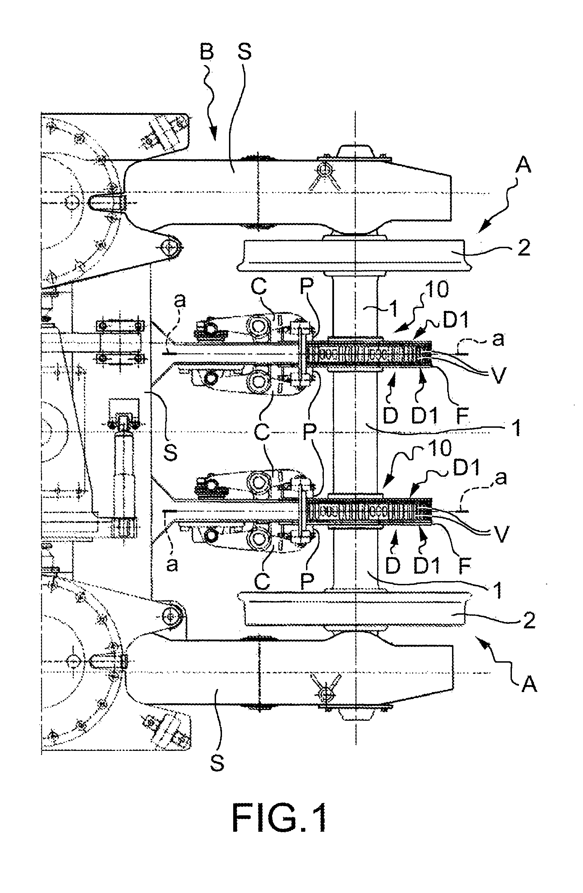

In Figure 1B indicates as a whole a bogie of a railway vehicle. As is in itself known this bogie comprises a loadbearing structure S in which a plurality of axles are rotatably supported, only one of which is illustrated in Figure 1, in which it is indicated as a whole by A. As is in itself known this axle comprises a shaft 1, on the extremity of which wheels 2 are keyed.

Two disk brakes, each indicated as a whole by 10, are associated with axle A. Each of these devices comprises a disk indicated as a whole by D, on the opposite lateral surfaces of which there act corresponding brake pads P borne by associated tiltable shoes C which can be operated by means of associated pneumatic pistons.

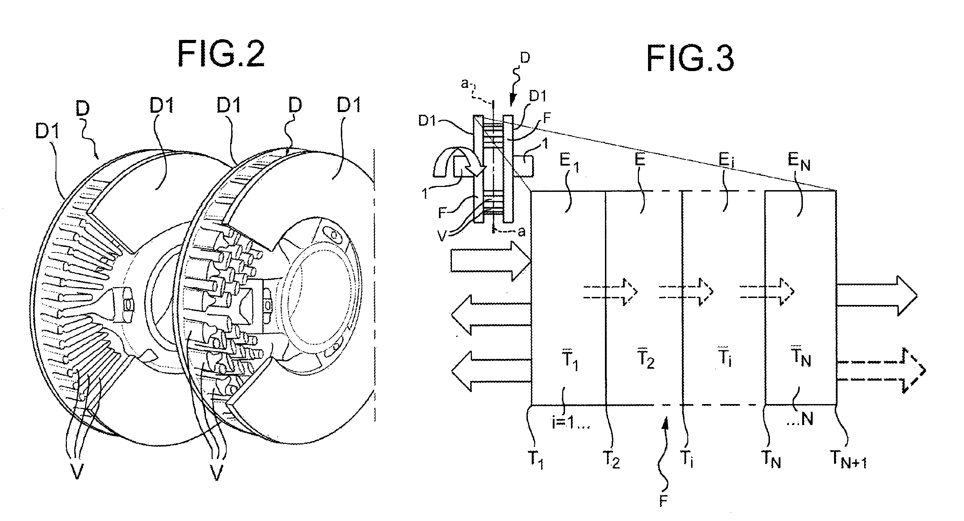

Each brake disk D comprises two extremity rings D1 between which there extend fins or blades V which generate forced ventilation when travelling. These fins may be of the radial or tangential type, as shown in Figure 2.

With reference to Figure 1, each brake disk D has an essentially symmetrical shape with respect to its median transverse plane a-a.

The process according to the invention is based on a one-dimensional physicalmathematical model of the brake disk D, and this model benefits from the condition of symmetry with respect to the median transverse plane a-a. This model in fact considers the energy balance, specifically the heat balance, in one of the two half-disks into which the disk D is subdivided by plane a-a.

With reference to Figure 3, in the algorithm implementing the process according to the invention the band F of each half-disk is considered to be subdivided into N discrete transversely adjacent annular elements, where N is a whole number, for example equal to 8.

With reference to Figure 3, the annular elements in band F are indicated by $E_i$, where i = 1, ...., N, from the element subjected to the force of a brake pad P to the terminal element subject to the action of the ventilation flow induced by fins or blades V.

Mean temperatures indicated by $\overline{T}_1,...,\overline{T}_N$ correspond to the discrete annular elements $E_1, .... E_N$.

The temperatures corresponding to the interfaces between the outer annular elements $E_1$ and $E_N$ and the outside environment are indicated by $T_1$ and $T_{N+1}$ respectively. The temperatures at the interfaces between the continuous annular elements are indicated in order by $T_2, T_3, ...., T_N$.

In what follows the subscript t will indicate the value of a quantity at time t. For example, $T_{i,t}$ (i = 2, ..., N+1) will indicate the temperature at the interface between the annular elements $E_i$ and $E_{i-1}$ at time t.

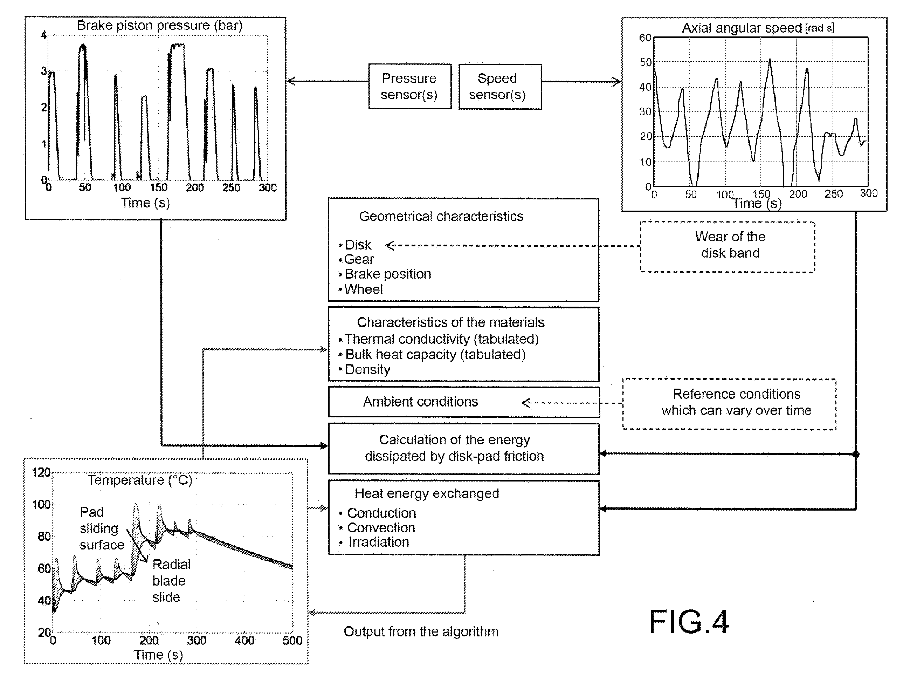

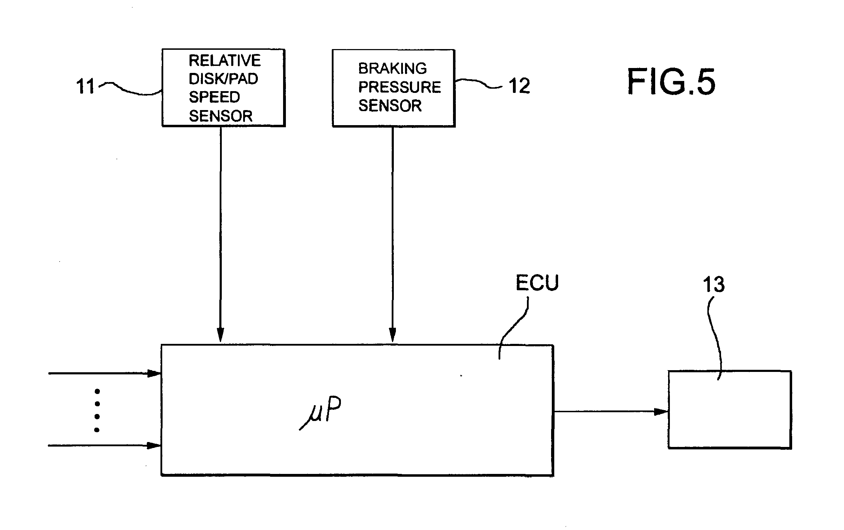

In the process according to the invention, the relative angular velocity between the brake disk D1 and the associated brake element or pad P is determined using a sensor 11 (Figures 4 and 5) having an electrical output. The strength of the force applied to the brake disk D through the effect of activating the associated braking actuator is also determined. This is achieved for example using a pressure sensor 12 which detects the braking pressure applied to the associated actuator (brake piston).

With reference to Figure 5, sensors 11 and 12 are connected to corresponding inputs to an electronic processing unit ECU, provided for example through the use of a microprocessor. Such a unit is in particular designed to implement the algorithm to which the diagrammatical illustration in Figure 4 relates, which will be better described below.

With reference to Figure 4, the algorithm performed by the electronic unit ECU provides that indicative data for many geometrical characteristics of the elements involved, in particular geometrical characteristics of the brake disk D, of its elements D1 and intervening fins V, as well as geometrical characteristics of the braking gear, the brake piston and the wheels 2 of bogie B, are first provided to the latter.

Data indicative of the characteristics of the materials constituting the aforesaid elements, such as thermal conductivity and bulk heat capacity and the density of the material forming brake disk D and the associated pads P are also first provided to unit ECU.

On the basis of the signals or data provided by the sensors 11 and 12, and the indicative data for the geometrical characteristics and characteristics of the materials, the electronic unit ECU calculates the mechanical energy converted into heat when the brake disk D and the associated pads P are brought into frictional contact together, in a manner which will be better described below, and therefore calculates the net heat energy applied to the brake disk as the difference between the said mechanical energy and the heat energy exchanged by the brake disk with the pads and the surrounding environment.

The unit ECU therefore obtains a quantitative indication of the temperature of brake disk D as a function of this net heat energy, and the mass and heat capacity of the brake disk.

The processing and control unit ECU therefore correspondingly controls a display and/or control device, indicated as a whole by 13 in Figure 5, as will be better described below.

For the purposes of determining the temperature and/or wear of brake disk D and associated pads P the algorithm used by unit ECU evaluates the heat energy input originating from the effect of friction between the said elements D and P in relative motion (mechanical energy which is transformed into dissipated heat energy). For this purpose the coefficient of friction $\mu$ may for example be accurately obtained during approval tests of the disk/pad system on a dynamometric bench as required by standard UIC541-3.

The algorithm starts by calculating the friction force between disk D and one of the two associated pads P, which is expressed as follows:

$$F_{fr} = \frac{\mu \cdot i \cdot \eta_{rig} \cdot \left(\eta_{seal} \cdot pA_{cyl} - F_{spr}\right)}{2n_{disc}} = \mu\left(k_1 \cdot p + k_2\right) \tag{1}$$

where $\mu$ is the friction coefficient between the brake disk and a pad, i is the total ratio of the rig which amplifies the force applied to the brake piston in the direction of the disk, $\eta_{rig}$ is the efficiency of the rig, $\eta_{seal}$ is the efficiency of the seal applied to the brake piston, p is the pneumatic pressure in the brake piston, $A_{cyl}$ is the active frontal surface area of the piston, $F_{spr}$ is the force of the antagonistic spring associated with the brake piston, and $k_1$ and $k_2$ are constants.

The mechanical energy dissipated by friction in element $E_1$ of brake disk D, where there is sliding between the disk and the pad, is:

$$P_{fr} = F_{fr} \cdot v_{brm} \tag{2}$$

where $v_{brm}$ is the slip speed of pad P corresponding to the mean braking radius. Assuming pure rotation between wheel 2 and the rail we obtain:

$$v_{brm} = \omega \cdot R_{brm} \qquad (3)$$

where $\omega$ is the angular velocity of brake disk D and $R_{brm}$ is the mean braking radius.

Substituting (1) and (3) in (2) we obtain:

$$P_{fr} = \mu \cdot \left( k_3 \cdot p \cdot \omega + k_4 \cdot \omega \right) \qquad (4)$$

where $k_3$ and $k_4$ are constants.

In the case where the force $F_{spr}$ of the antagonistic spring (not shown) of the brake piston is negligible with respect to the pressure force (as is for example the case in the typical mission profile of an underground transport service), a simplified expression:

$$P_{fr} = \mu \cdot k_3 \cdot p \cdot \omega \qquad (5)$$

is obtained.

Energy $P_{fr}$ is converted into heat energy transferred to the two elements (the disk D and pad P) in contact with each other.

With reference to expression (5) given above the friction coefficient $\mu$ between the pad and the disk depends on the following main factors:

- the slip speed: the function governing the change in $\mu$ with the relative speed $\omega$ of the two surfaces depends on the pair of materials (the materials constituting the disk and the pad),
- the temperature T at the interface (contact surface) between the disk and the pad; normally $\mu$ decreases with increasing temperature T,
- the specific contact pressure between the disk and the pad; normally $\mu$ falls as this pressure increases, and
- the wetness of the surfaces.

Friction coefficient $\mu$ is determined experimentally. Thus the function governing the change in $\mu$ must be regarded as being available or known to the manufacturers of braking systems.

The algorithm used in the process according to the invention uses a friction coefficient $\mu$ which is a function of the relative angular velocity $\omega$ between the brake disk and the pad; however if the relationship between $\mu$ and the abovementioned quantities is not known, a constant average value can be used as a first approximation.

The pressure on the brake piston p and the angular velocity $\omega$ are input parameters for the simulation model for assessing the temperature reached by the brake disk when in operation; the corresponding signals are provided by sensors 11 and 12, which are normally already present in railway vehicles on which latest generation braking systems are installed, for example the EPAC (Electro Pneumatic Advanced Control) system produced by the Applicant.

The heat energy $P_{fr}$ generated at the interface between brake disk D and a pad P is partly transmitted to the disk D and the remainder is transmitted to the pad P or dissipated into the environment in the form of heat.

The percentage of the heat energy passed to the brake disk depends on the thermal characteristics of the materials forming the disk and the pad, in particular their corresponding thermal conductivity, bulk heat capacity and density values.

In the algorithm implemented according to this invention, in order to correctly simulate conduction the transverse band F of a half-disk D1 is subdivided into a finite whole number N of elements $E_1$, ...., $E_N$, for each of which the change in temperature over time as a result of the effect of the net heat energy entering each of them is calculated for each one.

The net inflowing heat energy for each element in band F is given by the equation:

$$\dot{Q}_{net\_i,j} = m_i c_{i,j} \frac{d\overline{T}_{i,j}}{dt} \qquad (6)$$

where m is the mass of each element $E_1$, ..., $E_N$,
c is its bulk heat capacity, $\overline{T}$ is the mean temperature.

The subscript i in (6) refers to the $i^{th}$ subdivision element of the transverse band F of a half-disk D1; t indicates time.

The net energy entering the two extremity elements $E_1$ and $E_N$ takes into account heat exchanges with the surrounding environment through convection and radiation, and with the adjacent element ($E_2$, $E_{N-1}$) through conduction, as well as the heat energy generated at the disk-pad interface.

The intermediate elements $E_2$, ..., $E_{N-1}$ instead substantially exchange heat with the two elements adjacent to each through conduction only.

The algorithm takes into account the fact that brake disk D1 is ventilated. Ventilation takes place through convective heat exchange between the terminal elements $E_1$ and $E_N$ of the brake disk and the flow of circulating air.

The heat energy in general exchanged by convection has the value:

$$\dot{Q}_{conv} = \alpha \cdot A_{conv} \cdot (T_{wall} - T_{air}) \qquad (7)$$

where $\alpha$ is the convective heat exchange coefficient, $A_{conv}$ is the convection area, T is temperature.

The convective heat exchange coefficients on the ventilation side and the pad side, that is for the terminal elements $E_1$ and $E_N$, depend on the specific geometry and are greater the higher the forward speed of the train or equivalently angular velocity $\omega$.

The convective heat exchange coefficient on the pad side has the value (discrete annular element $E_1$) :

$$\alpha_{fr} = k_5 \cdot \overline{\rho}_{fr}^{e1} \cdot \omega^{e1} \qquad (8)$$

where $\rho_{fr}$ is the density of the air corresponding to the disk-pad friction surface, $k_5$ is a constant, and e1 is an exponent. $\overline{\rho}_{fr}$ depends on ambient temperature and pressure.

In this case, with reference to (7) the wall temperature $T_{wall}$ coincides with $T_1$ (the temperature of the wall in air of first element $E_1$ of band F starting from the pad side), that is the wall coinciding with the corona of disk D on which pad P moves.

The heat exchange coefficient on the ventilation side has the value:

$$\alpha_{ven} = k_6 \cdot \overline{\rho}_{ven}^{e2} \cdot \omega^{e2} \qquad (9)$$

where $\overline{\rho}_{ven}$ is the mean density of the air between ventilating elements V, which depends on the angular velocity $\omega$ and the temperature of the surfaces of those ventilating elements and the temperature of the ambient air, e2 is an exponent and $k_6$ is a constant.

In this case the wall temperature $T_{wall}$ is the same as $T_{N+1}$, (the temperature of the wall in air of the $N^{th}$ element $E_N$ of band F starting from the pad side).

In the situation where tangential fins are used (as in the brake disk on the right in Figure 2) instead of radial fins, equation (9) has a form which is a function of these magnitudes, but has different coefficients.

The heat energy exchanged by conduction corresponding to the interface between two consecutive discrete elements of band F has the value:

$$\dot{Q}_{cond} = -\lambda(T_i) \cdot A_{cond} \cdot \left.\frac{dT(t)}{dx}\right|_i \qquad (10)$$

where $\lambda$ is the thermal conductivity, x is the coordinate for position along the axis of the brake disk and $A_{cond}$ is the area of the conducting surface.

Finally, the heat energy exchanged by radiation between the walls of disk D and the air has the value:

$$\dot{Q}_{rad} = \varepsilon \cdot \sigma \cdot A_{rad} \cdot (T_i^4 - T_{air}^4) \qquad (11)$$

where $\varepsilon$ is the emission coefficient, $\sigma$ is the Stefan-Boltzmann constant, and $A_{rad}$ is the area of the radiant surface.

The algorithm used by the process according to the invention uses values stored in memory in a table, or interpolating polynomials, to determine the bulk thermal capacity c and the thermal conductivity $\lambda$ of disco D as temperature changes, with a variation function which depends on the material. Solving the system of equations (5), (6), (10) and (11), the algorithm can be used to calculate the temperature $\overline{T}_i$ at a generic moment of time t for the individual discrete elements $E_1$, ..., $E_N$, according to the equation:

$$\overline{T}_{i,t} = \overline{T}_{i,t=0} + \Delta T_{Algorithm,t} \qquad (12)$$

where $\Delta T_{Algorithm,t}$ is the increase in temperature calculated by the algorithm up to time t through the effect of the heat energy generated by friction between the disk D and the pad P and the heat exchanges due to convection, conduction and radiation described above. $\Delta T_{Algorithm,t}$ is a function of the angular velocity $\omega$, the pneumatic pressure p in the brake cylinders, the materials and geometry of the braking elements and environmental conditions.

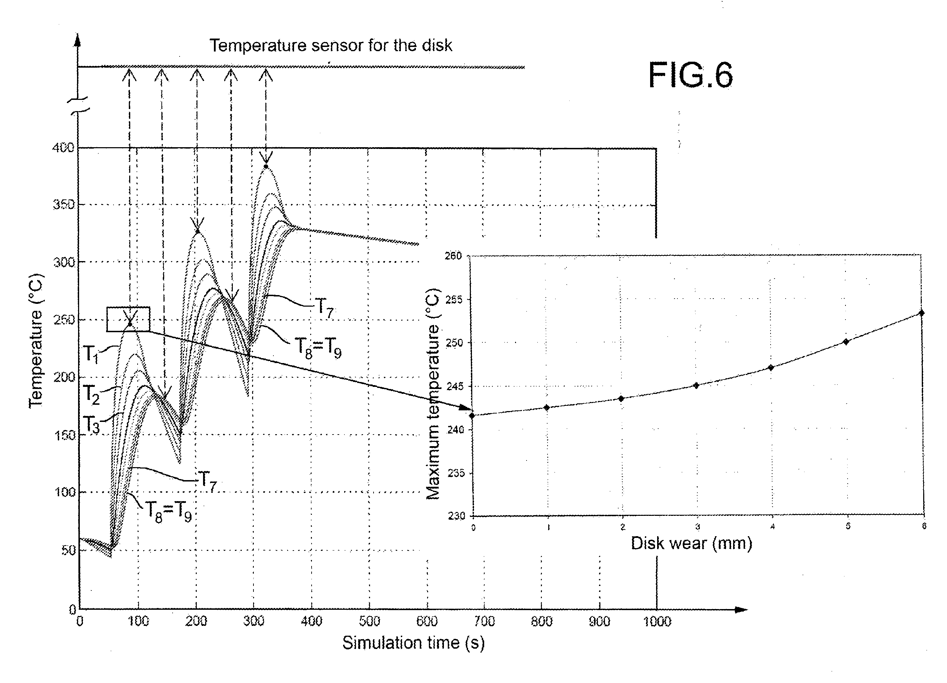

Figure 6 illustrates examples of changes in temperature $T_1$-$T_{N+1}$ at the N+1 interfaces shown in Figure 3, calculated using the procedure described above for a brake disk D of which a band F has been considered to be subdivided into N = 8 discrete elements.

In the main graph in Figure 6 $T_N = T_{N+1}$, that is $T_8 = T_9$, a condition which can be considered to be reasonably valid for a first approximation.

The main graph in Figure 6 also shows a horizontal line showing the limiting temperature associated with the brake disk. The "distance" between this line and the instantaneous assessed temperature of the brake disk (in particular the temperature at the "hottest" interface, that is the temperature $T_1$ at the interface corresponding to the disk-pad friction surface) provides an indication of the temperature margin available. This temperature margin corresponds to a maximum value of the forward speed of the train, and this also makes it possible to avoid reaching the limit temperature for the brake disk with braking of any kind.

The processing unit ECU may be designed to provide the train driver with an indication of this maximum permissible value for the forward speed through a display and/or control device 13 (Figure 5). The processing unit ECU may also be designed to initiate (or cause the initiation of) action on the train's traction with the view to "imposing" compliance with the maximum calculated speed.

Returning now again to Figure 6, the secondary graph providing a comparison on the right hand side indicates the change in the maximum value of temperature $T_1$ corresponding to the disk-pad friction surface as wear on the disk increases. As will be seen this maximum temperature value $T_1$ increases progressively with increasing wear on the disk D.

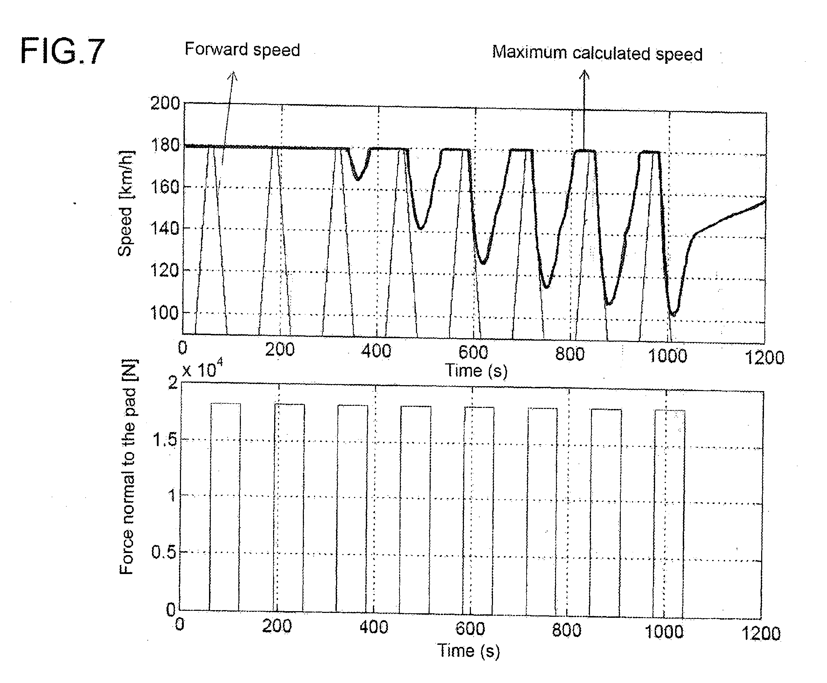

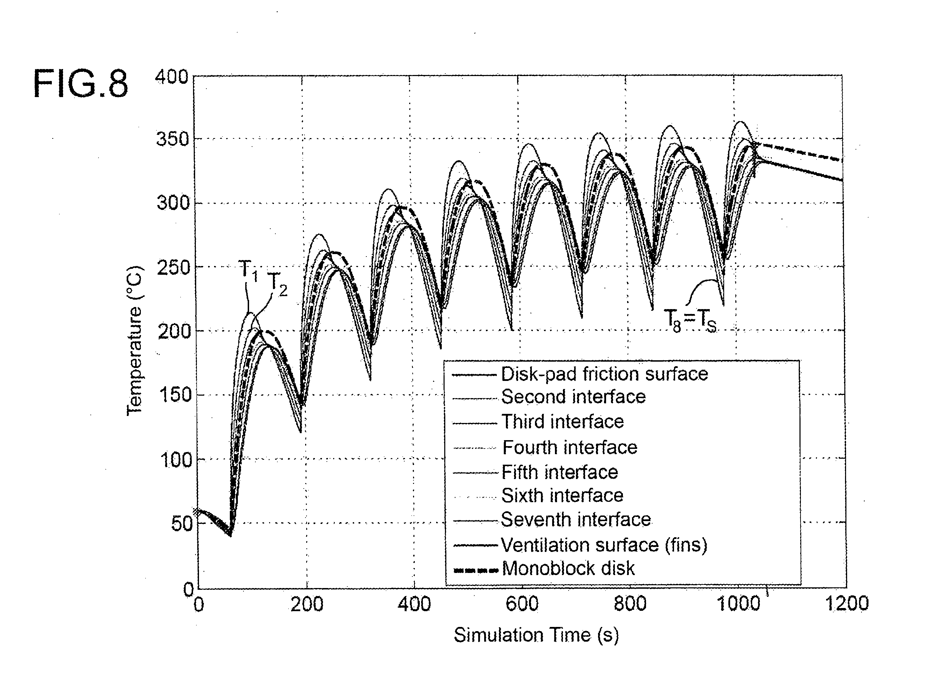

Figure 8 shows the changes in the temperatures $T_1$-$T_9$ at the nine interfaces of the N=8 elements into which the band F of a half disk D1 of a brake disk is regarded as being subdivided in a process according to the invention. The graphs in Figure 8, obtained by computer simulation, relate to an operating condition of the train (also simulated) illustrated by the graphs in Figure 7 in terms of forward speed (Figure 7, top graph) and braking (normal force exchanged at the pad-disk interface; Figure 7, bottom graph).

In the top graph in Figure 7 the bold line shows the change in the value of the maximum permitted speed for the train, calculated in relation to the estimated temperature of the brake disk.

In the graph in Figure 8 the dashed line shows the change in temperature calculated using the algorithm described above with N=1, that is regarding the (half) disk as a single or "monoblock" element.

Referring again now to equation (12), it can be taken to a first approximation that:

$$\overline{\overline{T}}_{i,j} = (T_{i,j} + T_{i+1,j})/2 \qquad (13)$$

where $\overline{T}_{i,t=0}$ is the initial mean temperature of the $i^{\text{th}}$ element $E_1$ of the band F of the disk D.

The thickness of material removed (from the disk and/or pad) per unit time can be estimated using the following empirical formula:

$$\dot{V} = k \cdot p_c^{e3} \cdot v^{e4} \cdot T^{e5} \qquad (14)$$

where the constants k, $e^3$, $e^4$, $e^5$ can be determined experimentally, $p_c$ is the contact pressure, v is the slip speed between disk D and pad P, and T is temperature.

In the case of the predetermined mission profiles (forward speed and pneumatic pressure on the brake cylinders in relation to the distance run or time) for distance travelled, it is possible to place the levels of wear of the disk D and/or the pads P measured in the approval tests on the dynamometric bench at different velocities for the onset of braking and the normal forces applied to the disk into the memory of the processing unit. In the implementation of the algorithm, as an alternative to the formula (14), it is possible to estimate the wear of the braking elements D, P by an interpolation based on the values stored in the processing unit.

The process according to the invention has many possible applications and incorporates many advantages.

With the process according to the invention it is for example possible to carry out a remote diagnosis of the disk, with recording of its temperature in relation to time or distance travelled. Remote diagnostic systems, also known as telemetric systems, are integrated systems which interface with the communications systems on board the vehicle (for example MVP, FIP, CAN, CANOpen or ECHELON), with data transmission systems, that is communications systems of the GSM-R/GPRS or Wi-Fi type, in which possible systems for the communication of events/alarms via SMS to the ground and to a "home base" may be implemented.

The process also makes it possible to identify possible repeated and/or prolonged overheating which might be dangerous for the integrity of the brake disk and which makes it possible to forecast in advance when the wear limit of the disk and/or the pads will be reached, when cracks might appear and the risk of ridging of the disk and the wheel.

Through diagnosis of the brake disk it is possible to forecast the service life of the component and plan for any maintenance work on the basis of operating conditions; this brings about a reduction in LCC (Life Cycle Cost) and machine downtimes.

The algorithm used in the process according to the invention can be simply parametered for each specific application by setting the corresponding values for the constant terms.

In its simplest version, that is without calculating wear on the brake disk and the pads, the process allows temperature calculation to be adjusted to new conditions of the brake disk discovered during ordinary maintenance; the algorithm can then be reparametered.

In a variant embodiment the process comprises a check on when, after the vehicle has been running for a predetermined length of time since the last application of the pneumatic brake, the temperature calculated by the algorithm coincides with the ambient temperature detected by means of an on-board sensor.

Through the process according to the invention the temperature rise at various points in the brake disk can be calculated from an initial value which when it coincides with the ambient temperature can be read from one or more temperature sensors on board (e.g. temperature measuring devices for climate control in the carriage) and provided to the algorithm as an input signal. Where an ambient temperature sensor is not available, this value can also be provided in the form of tables, or can be detected close to the brake disks through one or more dedicated temperature sensors.

The process according to the invention may be integrated with a simulation of the brake disk cooling process under stationary conditions (train stopped, for example in the yard), during a period of time in which processing unit ECU is off, in order to estimate the temperature of the brake disks at the time when that unit is switched on again. For periods during which the said unit is switched off for short periods the temperature of the disks when the unit is switched back on will not be the same as the ambient temperature and then the value will be estimated during the stage of initialisation of the unit after it has been switched back on by simulating the process of cooling of the disks by the effect of heat exchanges by convection and/or radiation since the last time the unit was switched off until it is switched on again.

Conveniently, although not necessarily, the train may be equipped with at least one sensor to detect the temperature reached at the disk-pad friction surface, with which it is possible to calibrate and check the model simulating the thermal behaviour of the braking elements at least during the stage when the system is being adjusted.

The system may also include a device capable of overriding a limitation on traction in order to ensure that forward progress continues unchanged if this is desired by the driver.

In order to implement the most complete version of the process the algorithm requires preliminary experimental tests in order to determine characteristic wear coefficients. In this case it may no longer be necessary to reparameterise because the algorithm itself can evaluate the reduction in bands F in relation to the pressure applied, the slip speed and the temperature.

In addition to what has been described above, through the process according to the invention it is also possible to indicate various quantities to the driver such as, for example, the instantaneous temperature in the brake disks or the maximum speed below which it is possible to carry out emergency braking without causing damage to the brake disks and/or overheating of the pads.

Naturally, the principle of the invention remaining the same, the forms of embodiment and details of construction may be varied widely with respect to those described and illustrated, which have been given purely by way of non-limiting example, without thereby departing from the scope of the invention.

**Claims**

1. A process for assessing the temperature of a brake disk (D) of a vehicle, in particular a railway vehicle or tram, operatively acting together with at least one brake element (P) adapted to be brought into frictional contact with the disk (D) through an associated actuator to ensure braking of the vehicle; the process comprising the operations of:

   - determining the relative angular velocity between the brake disk (D) and the brake element (P),
   - detecting the strength of the force applied to the brake disk (D) through the effect of activating the actuator,
   - calculating the mechanical energy converted by friction into heat when the disk (D) and the braking element (P) are brought into frictional contact,
   - calculating the heat energy exchanged between the brake disk (D) and the surrounding environment,
   - calculating the net thermal energy applied to the brake disk (D) as the difference between the said mechanical energy dissipated by friction and the said heat energy exchanged between the brake disk (D) and the environment, and
   - obtaining a quantitative indication of the temperature of the brake disk (D) as a function of the calculated net thermal energy;

   the process being **characterised by**
   calculating further the heat energy exchanged between the brake disk (D) and the at least one braking element (P), calculating the net thermal energy applied to the brake disk (D) as the difference between said mechanical energy dissipated by friction and the thermal energy exchanged between the brake disk (D) and said at least one braking element (P) and the environment,
   estimating the thickness of the material removed from the brake disk (D) per unit time, and
   obtaining said quantitative indication of the temperature of the brake disk (D) as a function of the thus calculated net thermal energy, the mass and the heat capacity of the brake disk (D).

2. A process according to claim 1, in which the net heat energy applied to the brake disk (D) is calculated using a one-dimensional physical/mathematical model of the brake disk (D) according to which the brake disk (D) is considered to be subdivided into a plurality (N) of discrete adjacent annular elements ($E_1$, ..., $E_N$) of which those at the extremities ($E_1$, $E_N$) are in a heat exchange relationship with the surrounding environment and with a discrete adjacent element ($E_2$, $E_{N-1}$), and in which the intermediate elements ($E_2$-$E_{N-1}$) are in a heat exchange relationship with the elements adjacent to them respectively.

3. A process according to claim 2, in which the corresponding change in temperature through the effect of the net heat energy entering each of them is calculated for each of the said discrete annular elements ($E_1$, ..., $E_N$).

4. A process according to claim 3, in which the corresponding change in temperature through the effect of heat exchanges by convection and radiation with the surrounding environment, and through the effect of heat exchange through conduction with the adjacent element ($E_2$, $E_{N-1}$), is calculated for the terminal annular elements ($E_1$, $E_N$).

5. A process according to any one of the preceding claims in which the maximum permissible value for the forward speed of the vehicle at which braking of the vehicle can still be performed without reaching the predetermined limit value for the temperature of the brake disk (D) can also be calculated dynamically.

**6.** A process according to any one of the preceding claims, in which the temperature changes in the brake disk (D) are calculated on the basis of an initial value obtained by means of an ambient temperature sensor normally used for other purposes.

**7.** A process according to any one of claims 1 to 5, in which temperature changes in the brake disk (D) are calculated from data stored in memory, for example in the form of tables, representative of ambient temperature.

**8.** A process according to any one of claims 1 to 5, in which temperature changes in the brake disks (D) are calculated on the basis of an initial value obtained using a dedicated temperature sensor located close to a brake disk.

**9.** A process according to any one of the preceding claims, including a simulation of the cooling of the brake disk (D) under the conditions when the vehicle is stationary.

**10.** A process according to claim 9, in which an electronic processing unit (ECU) is used and the value of the temperature of the brake disk (D) is estimated each time that unit (ECU) is switched on again when the time interval since the unit (ECU) was previously switched off is less than a predetermined value.

**11.** A process according to any one of the preceding claims comprising a check that the calculated temperature of the brake disk (D) coincides with the ambient temperature after a predetermined time for which the vehicle has been moving.

**12.** A process according to any one of claims 2 to 11, in which the temperature of the brake disk/pad friction surface is determined by means of a sensor and the value found for that temperature is used to check and calibrate the aforesaid brake-disk model at least during a stage of adjustment of the process.

**Patentansprüche**

**1.** Verfahren zum Bewerten der Temperatur einer Bremsscheibe (D) eines Fahrzeuges, insbesondere eines Schienenfahrzeuges oder einer Straßenbahn, die operativ mit wenigstens einem Bremselement (P) zusammenwirkt, das dafür ausgelegt ist, in Reibungskontakt mit der Scheibe (D) durch einen zugeordneten Betätiger gebracht zu werden, um ein Bremsen des Fahrzeuges sicherzustellen; wobei das Verfahren die nachfolgenden Vorgänge umfasst:

Bestimmen der Relativwinkelgeschwindigkeit zwischen der Bremsscheibe (D) und dem Bremselement (P),
Erfassen der Stärke der Kraft, die auf die Bremsscheibe (D) durch die Wirkung des Aktivierens des Betätigers einwirkt,
Berechnen der mechanischen Energie, die durch Reibung in Wärme umgewandelt wird, wenn die Scheibe (D) und das Bremselement (P) in Reibungskontakt gebracht werden,
Berechnen der Wärmeenergie, die zwischen der Bremsscheibe (D) und der umliegenden Umgebung ausgetauscht wird,
Berechnen der Nettowärmeenergie, die auf die Bremsscheibe (D) einwirkt, als Differenz zwischen der mechanischen Energie, die durch Wärme abgeleitet wird, und
der Wärmeenergie, die zwischen der Bremsscheibe (D) und der Umgebung ausgetauscht wird, und
Ermitteln einer quantitativen Angabe der Temperatur der Bremsscheibe (D) als Funktion der berechneten Nettowärmeenergie;
wobei das Verfahren **gekennzeichnet ist durch**:

des Weiteren erfolgendes Berechnen der Wärmeenergie, die zwischen der Bremsscheibe (D) und dem wenigstens einen Bremselement (P) ausgetauscht wird,
Berechnen der Nettowärmeenergie, die auf die Bremsscheibe (D) einwirkt, als Differenz zwischen der mechanischen Energie, die **durch** Reibung abgeleitet wird, und
der Wärmeenergie, die zwischen der Bremsscheibe (D) und dem wenigstens einen Bremselement (P) und der Umgebung ausgetauscht wird,
Schätzen der Dicke des Materials, das von der Bremsscheibe (D) pro Einheitszeit entfernt wird, und
Ermitteln der quantitativen Angabe der Temperatur der Bremsscheibe (D) als Funktion der so berechneten Nettowärmeenergie, der Masse und der Wärmekapazität der Bremsscheibe (D).

**2.** Verfahren nach Anspruch 1, bei dem die Nettowärmeenergie, die auf die Bremsscheibe (D) einwirkt, unter Verwendung eines eindimensionalen physikalisch/mathematischen Modells der Bremsscheibe (D) berechnet wird, entsprechend dem die Bremsscheibe (D) als in eine Mehrzahl (N) von diskreten benachbarten ringförmigen Elementen ($E_1$, ..., $E_N$) unterteilt betrachtet wird, von denen diejenigen an den äußeren Enden ($E_1$, $E_N$) in einer Wärmeaustauschbeziehung mit der umliegenden Umgebung und mit einem diskreten benachbarten Element ($E_2$, $E_{N-1}$) sind und bei denen die Zwischenelemente ($E_2$ bis $E_{N-1}$) in einer Wärmeaustauschbeziehung mit den zu ihnen jeweils benachbarten Elementen sind.

3. Verfahren nach Anspruch 2, bei dem die entsprechende Temperaturänderung durch die Wirkung der in jedes von ihnen eintretenden Nettowärmeenergie für jedes der diskreten ringförmigen Elemente ($E_1$, ..., $E_N$) berechnet wird.

4. Verfahren nach Anspruch 3, bei dem die entsprechende Temperaturänderung durch die Wirkung von Wärmeaustauschvorgängen durch Konvektion und Strahlung mit der umliegenden Umgebung und durch die Wirkung eines Wärmeaustausches durch Konduktion mit dem benachbarten Element ($E_2$, $E_{N-1}$) für die abschließenden ringförmigen Elemente ($E_1$, $E_N$) berechnet wird.

5. Verfahren nach einem der vorhergehenden Ansprüche, bei dem der maximal zulässige Wert für die Vorwärtsgeschwindigkeit des Fahrzeuges, bei der ein Bremsen des Fahrzeuges noch ausgeführt werden kann, ohne den vorbestimmten Grenzwert für die Temperatur der Bremsscheibe (D) zu erreichen, auch dynamisch berechnet werden kann.

6. Verfahren nach einem der vorhergehenden Ansprüche, bei dem die Temperaturänderungen in der Bremsscheibe (D) auf Grundlage eines Anfangswertes berechnet werden, den man mittels eines Umgebungstemperatursensors erhält, der üblicherweise für andere Zwecke verwendet wird.

7. Verfahren nach einem der Ansprüche 1 bis 5, bei dem Temperaturänderungen in der Bremsscheibe (D) aus Daten zur Darstellung einer Umgebungstemperatur berechnet werden, die in einem Speicher, beispielsweise in Form von Tabellen, gespeichert sind.

8. Verfahren nach einem der Ansprüche 1 bis 5, bei dem Temperaturänderungen in den Bremsscheiben (D) auf Grundlage eines Anfangswertes berechnet werden, den man unter Verwendung eines eigens vorgesehenen Temperatursensors ermittelt, der nahe an einer Bremsscheibe befindlich ist.

9. Verfahren nach einem der vorhergehenden Ansprüche, beinhaltend eine Simulation des Kühlens der Bremsscheibe (D) unter den Bedingungen, wenn das Fahrzeug stationär ist.

10. Verfahren nach Anspruch 9, bei dem eine elektronische Verarbeitungseinheit (ECU) verwendet wird und der Wert der Temperatur der Bremsscheibe (D) jedes Mal geschätzt wird, wenn die Einheit (ECU) wieder eingeschaltet wird, wenn das Zeitintervall, seitdem die Einheit (ECU) vorher ausgeschaltet wurde, geringer als ein vorbestimmter Wert ist.

11. Verfahren nach einem der vorhergehenden Ansprüche, umfassend eine Prüfung, dass die berechnete Temperatur der Bremsscheibe (D) mit der Umgebungstemperatur nach einer vorbestimmten Zeit, während der sich das Fahrzeug bewegt hat, zusammenfällt.

12. Verfahren nach einem der Ansprüche 2 bis 11, bei dem die Temperatur der Bremsscheiben-/Backenreibungsoberfläche mittels eines Sensors bestimmt wird und der für jene Temperatur gefundene Wert zum Prüfen und Kalibrieren des vorbeschriebenen Bremsscheibenmodells wenigstens während einer Anpassungsphase des Prozesses verwendet wird.

## Revendications

1. Procédé pour estimer la température d'un disque de frein (D) d'un véhicule, en particulier d'un véhicule ferroviaire ou d'un tramway, agissant fonctionnellement conjointement avec au moins un élément de frein (P) apte à être amené en contact à frottement avec le disque (D) au moyen d'un actionneur associé pour assurer le freinage du véhicule ; le procédé comprenant les opérations :

   - de détermination de la vitesse angulaire relative entre le disque de frein (D) et l'élément de frein (P) ;

- de détection de l'intensité de la force appliquée au disque de frein (D) sous l'effet de l'activation de l'actionneur ;
- de calcul de l'énergie mécanique convertie par frottement en chaleur lorsque le disque (D) et l'élément de freinage (P) sont amenés en contact à frottement ;
- de calcul de l'énergie thermique échangée entre le disque de frein (D) et l'environnement ambiant ;
- de calcul de l'énergie thermique nette appliquée au disque de frein (D) en tant que différence entre ladite énergie mécanique dissipée par frottement et ladite énergie thermique échangée entre le disque de frein (D) et l'environnement ; et
- d'obtention d'une indication quantitative de la température du disque de frein (D) en fonction de l'énergie thermique nette calculée,

le procédé étant **caractérisé par** :

le calcul en outre de l'énergie thermique échangée entre le disque de frein (D) et l'au moins un élément de freinage (P) ;
le calcul de l'énergie thermique nette appliquée au disque de frein (D) en tant que différence entre ladite énergie mécanique dissipée par  frottement et l'énergie thermique échangée entre le disque de frein (D) et ledit au moins un élément de freinage (P) et l'environnement ;
l'estimation de l'épaisseur de la matière enlevée du disque de frein (D) par unité de temps ; et
l'obtention de ladite indication quantitative de la température du disque de frein (D) en fonction de l'énergie thermique nette ainsi calculée, de la masse et de la capacité calorifique du disque de frein (D).

2. Procédé selon la revendication 1, dans lequel l'énergie thermique nette appliquée au disque de frein (D) se calcule en utilisant un modèle physique/mathématique unidimensionnel du disque de frein (D) selon lequel le disque de frein (D) est considéré comme étant subdivisé en une pluralité (N) d'éléments annulaires adjacents discrets ($E_1$, ..., $E_N$) dont ceux aux extrémités ($E_1$, $E_N$) sont en relation d'échange thermique avec l'environnement ambiant et avec un élément adjacent discret ($E_2$, $E_{N-1}$), et dans lequel les éléments intermédiaires ($E_2$ à $E_{N-1}$) sont dans une relation d'échange thermique avec les éléments qui leur sont respectivement adjacents.

3. Procédé selon la revendication 2, dans lequel le changement correspondant de température sous l'effet de l'énergie thermique nette entrant dans chacun d'eux est calculé pour chacun desdits éléments annulaires discrets ($E_1$, ..., $E_N$).

4. Procédé selon la revendication 3, dans lequel le changement correspondant de température sous l'effet des échanges thermiques par convection et rayonnement avec l'environnement ambiant, et sous l'effet d'échange thermique par conduction avec l'élément adjacent ($E_2$, $E_{N-1}$), est calculé pour les éléments annulaires terminaux ($E_1$, $E_N$).

5. Procédé selon l'une quelconque des revendications précédentes, dans lequel on peut aussi calculer dynamiquement la valeur maximale admissible pour la vitesse en marche avant du véhicule à  laquelle le freinage du véhicule peut encore se faire sans atteindre la valeur limite prédéterminée pour la température du disque de frein (D).

6. Procédé selon l'une quelconque des revendications précédentes, dans lequel les changements de température dans le disque de frein (D) sont calculés sur la base d'une valeur initiale obtenue au moyen d'un capteur de température ambiante normalement utilisé à d'autres fins.

7. Procédé selon l'une quelconque des revendications 1 à 5, dans lequel les changements de température dans le disque de frein (D) sont calculés à partir de données mémorisées en mémoire, par exemple sous la forme de tables représentatives de la température ambiante.

8. Procédé selon l'une quelconque des revendications 1 à 5, dans lequel les changements de température dans les disques de frein (D) sont calculés sur la base d'une valeur initiale obtenue en utilisant un capteur de température spécialisé situé près d'un disque de frein.

9. Procédé selon l'une quelconque des revendications précédentes, incluant une simulation du refroidissement du disque de frein (D) dans les conditions où le véhicule est arrêté.

10. Procédé selon la revendication 9, dans lequel on utilise une unité électronique de traitement (ECU) et l'on estime la valeur de la température du disque de frein (D) chaque fois que l'unité (ECU) est mise sous tension à nouveau lorsque l'intervalle de temps depuis que l'unité (ECU) a été antérieurement mise hors tension est inférieur à une valeur prédéterminée.

**11.** Procédé selon l'une quelconque des revendications précédentes, comprenant la vérification que la température calculée du disque de frein (D) coïncide avec la température ambiante après un temps prédéterminé pendant lequel le véhicule a été en mouvement.

**12.** Procédé selon l'une quelconque des revendications 2 à 11, dans lequel la température de la surface de frottement disque/plaquette de frein est déterminée au moyen d'un capteur et la valeur trouvée pour cette température est utilisée pour vérifier et calibrer le modèle de frein-disque mentionné ci-dessus au moins durant un stade de réglage du procédé.

FIG.1

FIG.3

FIG.2

**Brake piston pressure (bar)**

**Axial angular speed [rad s]**

Pressure sensor(s)

Speed sensor(s)

**Geometrical characteristics**

• Disk
• Gear
• Brake position
• Wheel

Wear of the disk band

**Characteristics of the materials**
• Thermal conductivity (tabulated)
• Bulk heat capacity (tabulated)
• Density

Ambient conditions

Reference conditions which can vary over time

Calculation of the energy dissipated by disk-pad friction

**Heat energy exchanged**
• Conduction
• Convection
• Irradiation

**Temperature (°C)**

Pad sliding surface

Radial blade slide

Output from the algorithm

FIG.4

EP 1 950 111 B1

FIG.5

11 ⌒ 
RELATIVE DISK/PAD SPEED SENSOR

BRAKING PRESSURE SENSOR ⌒ 12

ECU

μP

13

FIG.6

EP 1 950 111 B1

FIG.7

Forward speed

Maximum calculated speed

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 102005019276 A1
- EP 1083360 A
- DE 4316993 A1
- DE 10157449 A1
- WO 9200212 A1
- GB 2289765 A